# EUROPEAN PATENT APPLICATION

(11) **EP 0 627 593 A1**
(43) Date of publication of application: **07.12.1994**
(21) Application number: 94830234.4
(22) Date of filing: 19.05.1994
(51) Int. Cl.: F16L 47/00

(54) **Pipe drilling tool for applying strapping taps to PVC pipes, in particular pipes for irrigation**

(30) Priority: 19.05.1993 IT RM930330
(71) Applicant: Cocco, Olibrio, I-09040 Maracalagonis, (Cagliari) (IT)
(72) Inventor: Cocco, Olibrio, I-09040 Maracalagonis, (Cagliari) (IT)
(74) Representative: Sarpi, Maurizio

(57) **Abstract**

A pipe drilling tool including a first threaded pipe coupling (21) screwed to a collar (27) provided in a strapping tap (23, 24) affixed to a pipe (26), a second threaded pipe coupling (17) concentric to the former, and a threaded pipe (13) screwed within said second pipe coupling (17) and carrying at one end a control handle (10) and at the other end an interchangeable end drilling mill (15) for drilling the pipe (26) as a result of the rotation of said control handle (10). In order to drill a pipe under a liquid pressure, a pipe (13) provided with a cylindrical non-threaded part (13B) and a second different pipe coupling (17A) comprising sealing means on the non-threaded part (13B) of pipe (13) are used.

## Description

The present invention relates to a pipe drilling tool to quickly and exactly drill a hole into a pipe at a predetermined position.

At the present state of art, upon applying a branch pipe to a pipe of PVC or other similar material a socalled "strapping tap" is used consisting of a threaded collar having an axis perpendicular to the axis of the pipe and carried by a pair of jaws which are tightly clamped around the main pipe at the desired point.
The branch pipe is screwed to said collar after having drilled the pipe where the collar is applied.
Since in most cases the installation of the strapping taps is carried out in locations remote from built-up areas, then without electric power, which prevents electric drills and/or other powered tools from being used, a pipe can be drilled at a desired point by resorting to empirical, coarse systems consisting in the use of chisels, hammers, punches, screwdriver and the like. Of course, the hole thus obtained is extremely imprecise, irregular, and in many cases insufficient apart from the fact that the residues of the thus drilled holes penetrate into the pipe and can cause clogging.

The main object of the invention is of providing a portable tools of the above-mentioned type which can quickly and precisely drill a hole with a predetermined diameter, and allows the drilling offcut ("plug") to be recovered so as to avoid any problem of the above-mentioned type.

In accordance with the invention there is provided a tool including a pair of threaded concentric pipe couplings, the outer pipe coupling being screwed to the inner thread of the collar of the strapping tap, and a threaded pipe screwed to the inner pipe coupling, said tool carrying also at the front end an end mill having an interchangeable drill and at the other end a control handle.
The drilling mill has a diameter corresponding to that of the hole to be drilled into the pipe, said mill being also hollow so as to hold inside the drilling offcut or plug caused when drilling the pipe.
Provided within the threaded pipe is a plug kick-off rod which is operated when the tool disengages from the collar of the strapping tap at the end of the drilling.
In order to allow pipes to be drilled in already operating plants, i.e. where liquids are present, without stopping the flow of the liquid, an alternative embodiment is provided in combination with a ball valve (of the commercial type) directly screwed to said collar of the strapping tap.

This invention will now be described with reference to the accompanying drawings which show by way of an illustrative and non-limitative example two preferred embodiments of the invention. In the drawings:
Fig. 1 is an elevation view of the tool;
Fig. 2 is a partially sectioned view along a plane orthogonal to the axis of the pipe showing the use of the tool;
Fig. 3 shows a detail of the offcut kick-off system;
Fig. 4 is a plan view of a pipe coupling for sealing the tool;
Fig. 4a shows a section of the pipe coupling along the axial plane A-A of Fig. 4;
Fig. 5 shows a side longitudinal elevation view of the pipe coupling of Fig. 4 according to a section along a plane perpendicular to the axis B-B;
Fig. 6 is an elevation view of the threaded pipe of the sealed embodiment of the tool;

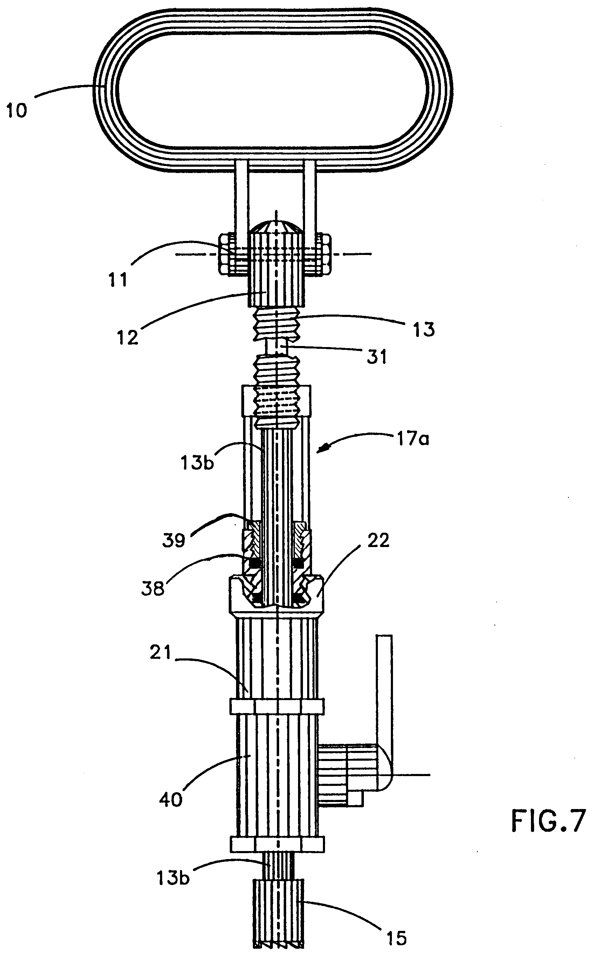

Fig. 7 is a partially sectioned view according to a plane orthogonal to the axis of the pipe showing the use of the tool of the sealed embodiment.

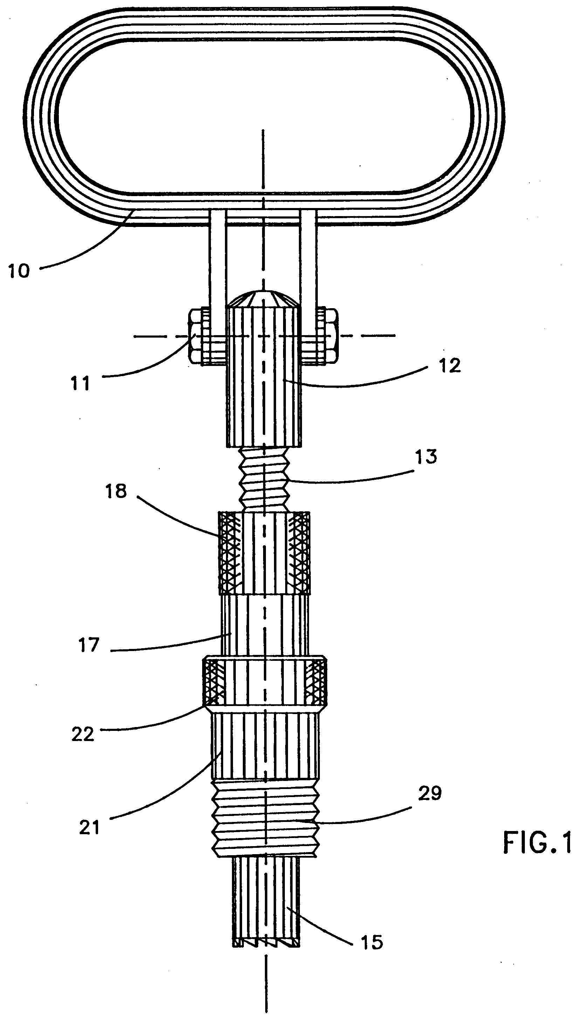

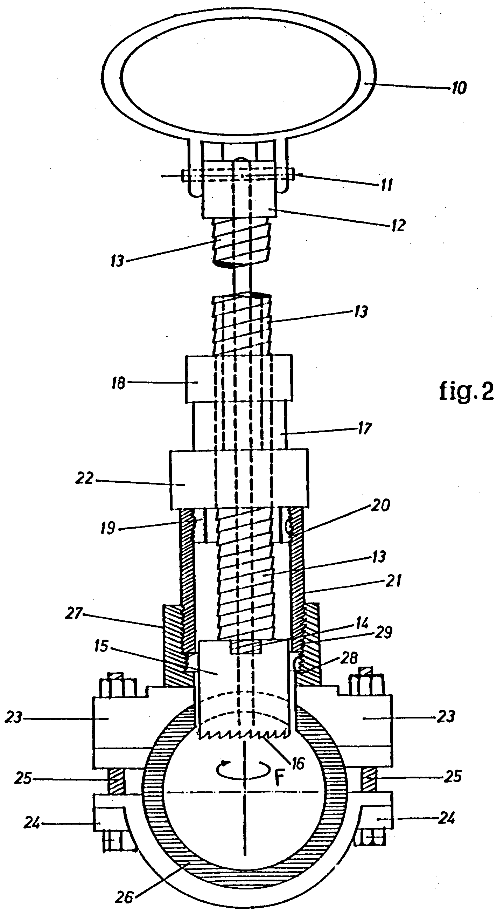

With reference to Figs. 1 and 2 numeral 10 designates the control handle of the tool pivotally engaged at 11 to sleeve 12 which is integral with threaded pipe 13 ending in a tang 14, to which an end drilling mill assembly 15 provided with teeth 16 is screwed.
Drill 15 is interchangeable so as to allow holes of different diameters to be drilled.
Screwed to threaded pipe 13 is a pipe coupling 17 carrying a knurled ring 18 and a threaded part 19 which in turn is screwed to the inner thread 20 of a second concentric pipe coupling 21 provided with the knurled ring 22.
The per se known strapping tap is formed of two jaws 23 and 24 which are tightly clamped by bolts 25 to the main pipe 26 at the point to which the branch pipe should be connected. Upper jaw 23 carries a collar 27 provided with an inner thread 28 to which the branch pipe is screwed (not shown). The two jaws 23 and 24 as well as collar 27 are of varying size according to the diameter of the main pipe 26 and the branched pipe. Also the drilling end mill 15, as already mentioned, may have different diameters according to the diameters of the holes to be drilled.

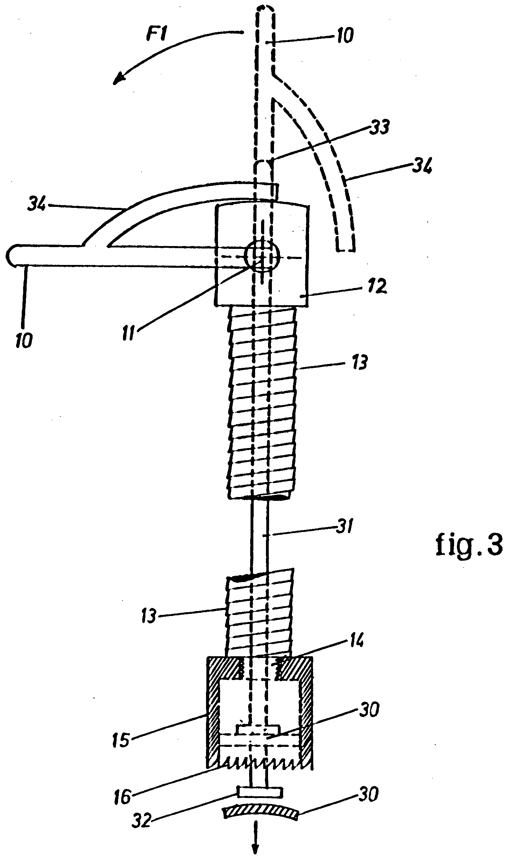

The use of the tool according to the invention is extremely easy and fast: as can be seen in Figure 2, outer pipe coupling 21 carries at its lower side a threaded part 29 screwed to the inner thread 28 of collar 27. The connection of said two threaded members is made easy by the knurled ring 22 allowing them to be manually screwed without the need of any tool. Once applied the device to the strapping tap and after having clamped also the knurled ring 18, it is sufficient to rotate handle 10 to the direction of arrow F. Drill 15 is moved downwards, and teeth 16 perforate pipe 26 drilling a perfectly circular hole.
As seen in Figure 3, the drilling offcut (plug) designated by 30 enters the cavity of drilling mill 15. Provided within the threaded pipe 13 is a slidable rod 31 passing axially through the tool and carrying at its lower end a disc 32 and projecting with its upper end 33 above sleeve 12.
Control handle 10 carries a shaped tab 34 acting on rod 31. Once drilled pipe 26, the tool is removed and handle 10 is rotated about its pivot 11 according to the direction indicated by arrow F1 of Fig. 3.
Shaped tab 34 acts on rod 31 causing it to slide downwards so that disc 32 ejects offcut 30.

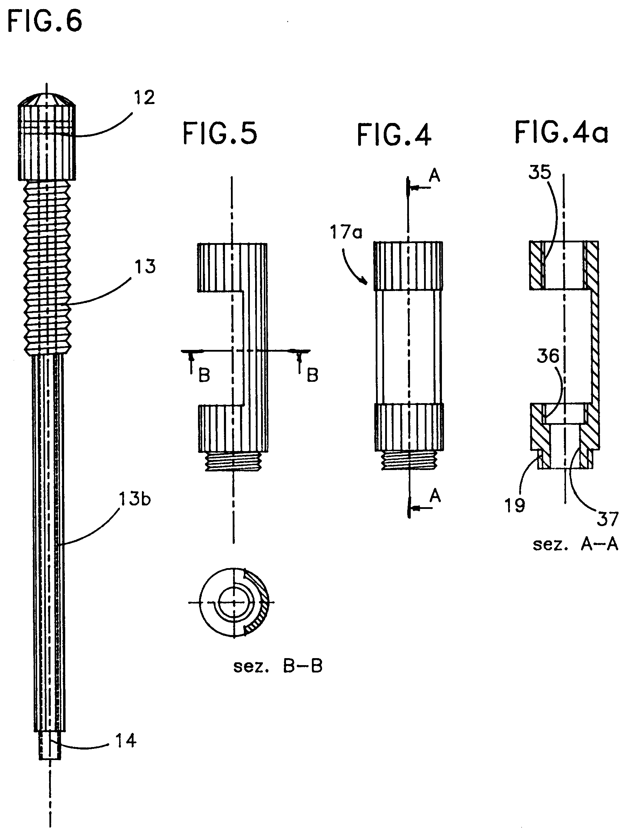

From the foregoing description it is apparent that the easy and fast use of the present invention allows holes to be carefully drilled. However, a problem could arise in case the pipes to be drilled are already under a liquid pressure, i.e. when a liquid is flowing therein. It is self-evident that in such case the operations described above would cause the leakage of the liquid from the pipe at least as long as the connection to the branch pipe is brought about.
In order to avoid such problem without stopping the flow of the liquid in the pipe to be drilled, an alternate embodiment has been conceived allowing branch pipes to be connected to the main pipe without emptying on the one hand the pipe to be drilled and on the other hand without giving up the advantages of the present invention.
This alternate embodiment relates generally to the already described inner pipe coupling 17 and threaded pipe 13. Pipe coupling 17 of Figures 1 and 2 is replaced in such alternate embodiment by a pipe coupling 17A shown in Fig. 4.

Such pipe coupling includes at one end a threaded hole 35 similar to that of the preceding pipe coupling 17 to which the threaded pipe 13 of Fig. 6 is screwed, a threaded hole 36 in which a packing coupling 39 is engaged, a cylindrical sleeve 37 guiding the non-threaded part 13B of the pipe of Fig. 6, and a threaded part 19 similar to that of Fig. 2 which is screwed to the already described pipe coupling 21.
Fig. 5 shows the section B-B of the central part of pipe coupling 17A along plane B-B perpendicular to the axis of the pipe coupling.
Coaxially inserted into the threaded hole 36 are firstly the elastic packing gland 38 (e.g. of rubber) and then the packing coupling 39. The latter should be tightly clamped only after having screwed pipe 13 of Fig. 6 into the threaded hole 35 of pipe coupling 17A so that at the same time the non-threaded part 13B of the pipe is inserted into guide sleeve 37. To this point, the already described pipe coupling 21 is screwed to pipe coupling 17A, and the procedure is from now the same as in the former embodiment.
It should be noted that the other parts designated by the same numerals of the former embodiment remain unchanged.
The use of such alternate embodiment is also very easy. The operations to be carried out are as follows: the strapping tap comprising the already described branch collar 27 is placed around the pipe to be drilled; a ball valve 40 (of the ordinarily used type) is screwed to said collar 27, and after having opened the same, the already mentioned pipe coupling 21 is screwed thereto by using the tool in the same way as previously described upon drilling a hole. Once drilled the hole, handle 10 is rotated in the opposite direction to return the end mill to the initial position, i.e. within pipe coupling 21.
Now, it is sufficient to close ball valve 40 and to unscrew the tool from the valve. It is evident that in such a way a branch is obtained which is provided with a valve 40 which can be connected to a branch pipe.

The present invention has been illustrated and described according to two preferred embodiments but it should be appreciated that construction modifications can be made by those skilled in the art without departing from the scope of the present industrial invention.

## Claims

1. A pipe drilling tool for applying strapping taps to PVC pipes, in particular pipes for irrigation, wherein it includes in combination a pair of concentric threaded pipe couplings (17 or 17A, 21), a threaded pipe (13) carrying at one end an end drilling mill (15) for drilling pipe (26) at the desired position, and at the other end a control handle (10) associated to kick-off means for ejecting the drilling offcut (30).

2. A tool as claimed in claim 1, characterized in that said pair of concentric threaded sleeve (17 or 17A, 21) are telescopically mounted and provided with knurled rings (18, 22) or means for the manual screwing.

3. A tool as claimed in claim 1 and 2, characterized in that the diameters of outer pipe coupling (21) and end drilling mill (15) are varying as a function of the diameters of the main pipe (26), the branch pipe, and the hole to be drilled.

4. A tool as claimed in claims 1 to 3, characterized in that one end of the outer pipe coupling (21) is provided with an outer threaded part (29) engaged to the inner threaded part (28) provided in collar (27) of the strapping tap.

5. A tool as claimed in claims 1 to 4, characterized in that said threaded pipe includes a non-threaded cylindrical part (13B) between the threaded part (13) and the bottom end, and that pipe coupling (17A) screwed to pipe (13) has a guide (37) for said non-threaded part (13B), and that pipe coupling (17A) is provided with liquid-tight means.

6. A tool as claimed in claim 5, characterized in that said liquid-tight means is formed of a packing gland (38) and a packing coupling (39) coaxial to guide (37) of pipe coupling (17A), and that said packing coupling (39) is tightened to provide the sealing between the elastic packing gland (38) and the non-threaded part (13B).

7. A tool as claimed in claims 1 to 4 or 5 and 6, characterized in that the drilling mill is hollow so as to hold the drilling offcut (plug) (30) formed when drilling pipe (26).

8. A tool as claimed in claims 1 to 4, or 5 and 6, and 7, characterized in that control handle (10) is integral with the threaded pipe (13) and is attached at the top end of the latter to sleeve (12).

9. A tool as claimed in claims 1 to 4, or 5 and 6, and from 7 on, characterized in that control handle (10) is pivotally engaged at pin (11) diametrically placed on said sleeve (12).

10. A tool as claimed in claims 1 to 4, or 5 and 6, and from 7 on, characterized in that said ejecting means of offcut (30) is formed of slidable rod (31) axially aligned along the whole tool and carrying at the bottom end a disc (32) placed within the drilling mill (15) near its teeth (16).

11. A tool as claimed in claims 1 to 4, or 5 and 6, and from 7 on, characterized in that said rod (31) ends at the upper side near control handle (10), and that the slide of rod (31) for ejecting the offcut is controlled by a shaped tab (34) which is integral with control handle (10) and acts on rod (31) when the control handle is rotated by 90° about its pivot (11).

12. A pipe drilling tool for applying strapping taps to PVC pipes, according to claims from 1 to 4, or from 5 to 6, and from 7 onwards, as substantially described and illustrated in the enclosed drawings.
